# EUROPEAN PATENT APPLICATION

(11) **EP 3 048 195 A1**
(43) Date of publication of application: **27.07.2016**
(21) Application number: 16152050.7
(22) Date of filing: 20.01.2016
(51) Int. Cl.: D04B 1/22, A43B 1/04, D04B 1/16

(54) **SHOE STRUCTURE AND MANUFACTURING METHOD THEREOF**

(30) Priority: 20.01.2015 US 201514601090
(71) Applicant: Aknit International Ltd., Apia (WS)
(72) Inventor: Lin, Chung-Kuang, 112 Taipei City (TW); Kuo, Ming-Sheng, 404 Taichung City (TW); Hsieh, Hsien-Hsiao, 500 Changhua County (TW)
(74) Representative: dompatent von Kreisler Selting Werner - Partnerschaft von Patent- und Rechtsanwälten mbB

(57) **Abstract**

A shoe structure includes a shoe body knitted from at least one yarn in unitary structure with only one opening for receiving a foot of a wear therein. The shoe body includes an upper section, a sole section, and a rear section connected by knitting without any sewing portion when the shoe body is formed. The upper section corresponds to fore and lateral portions of the foot. The sole section supports a sole portion of the foot. The rear section corresponds to a heel portion of the foot, wherein the shoe body consists of multiple courses and wales formed by the at least one yarn. The wales in the upper section extend along a direction perpendicular to a receiving direction of the opening into the shoe body.

## Description

### FIELD OF THE INVENTION

The present invention relates to a shoe structure, and in particular to a shoe structure that is a unitary knitted structure and a manufacturing method thereof.

### BACKGROUND OF THE INVENTION

A known shoe is often of poor ventilation due to the material used and may sometimes cause an uncomfortable feeling. A user's foot is often enclosed in the shoe for a substantial amount of time so that if the shoe is of poor ventilation, disease may be easily caused on the foot. Further, in the traditional way of manufacturing shoes, a large amount of material is lost during the process of cutting, jointing, and trimming. This causes an environmental issue and also increases the manufacture cost of shoes.

### SUMMARY OF THE INVENTION

Due to the shortcomings of the prior art, it is desired to have a shoe structure that saves material used and provides air permeability and hygroscopicity in order to overcome the above-discussed problems. Thus, an object of the present invention is to provide a shoe structure, which has an integrally-formed shoe body that is formed by knitting process and free of sewing arrangement, saves the material cost and manufacturing cost of the structure of shoe.

Another object of the present invention is to provide a shoe structure including a unitary shoe body that completely complies with human engineering so as to be well suited to the wearer's foot, comfortable, and completely enclosing and provides an effect of hygroscopicity and air permeability.

A further object of the present invention is to provide a shoe structure which is of wide applications in various functional shoes, indoor shoes, and outdoors sports shoes according to different needs.

Yet a further object of the present invention is to provide a shoe structure which has excellent elasticity so that the shoe, when worn on a wearer, is in close and compliant engagement with the wearer, just like a second skin, making the wearer feel comfortable when wearing the shoe.

According to the above objects, the present invention provides a shoe structure, which includes a shoe body knitted from at least one yarn in unitary structure with only one opening for receiving a foot of a wearer therein. The shoe body includes an upper section, a sole section, and a rear section, which are connected by knitting without any sewing portion, wherein the upper section corresponds to fore and lateral portions of the foot; the sole section supports a sole portion of the foot; the rear section corresponds to a heel portion of the foot. The shoe body consists of multiple courses and wales formed by the at least one yarn, wherein the wales in the upper section extend along a direction perpendicular to a receiving direction of the opening into the shoe body.

In an embodiment, the wales in the rear section and the sole section extend along the same direction as the wales in the upper section. In another embodiment, the wales in the rear section extend along a direction parallel to the receiving direction of the opening.

The shoe structure further includes a reinforcement layer knitted from a thermal plastic yarn on the shoe body, wherein the reinforcement layer and the shoe body are simultaneously knitted together when the shoe body is formed, and the reinforcement layer is thermal-curable.

In an embodiment, the shoe structure further includes an auxiliary shoe body knitted from at least one yarn in unitary structure, wherein the auxiliary shoe body has a shape conformal to the shoe body. The auxiliary shoe body is inserted into the shoe body through the opening; the reinforcement layer is sandwiched between the shoe body and the auxiliary shoe body and cured to attach the auxiliary shoe body to the shoe body.

The present invention also provides a method for manufacturing a shoe structure. The method includes knitting at least one yarn to form a shoe body in unitary structure with an opening for receiving a foot of a wearer, the shoe body including an upper section, a sole section, and a rear section connected by knitting without any sewing portion, the upper section corresponding to fore and lateral portions of the foot, the sole section supporting a sole portion of the foot, the rear section corresponding to a heel portion of the foot; and knitting a thermal plastic yarn to form a reinforcement layer on the shoe body, wherein the reinforcement layer and the shoe body are simultaneously knitted together when the shoe body is formed.

In an embodiment, the at least one yarn is knitted along a first direction in the upper section and changes to a second direction in the rear section, the first direction and the second direction are two cross directions.

In an embodiment, the method further includes curing the reinforcement layer to form a reinforcement structure for the shoe body and shape the shoe body by thermal plastic molding.

In an embodiment, the method further includes knitting at least one yarn to form an auxiliary shoe body, the auxiliary shoe body having a shape conformal to the shoe body; inserting the auxiliary shoe body into the shoe body through the opening and the reinforcement layer is sandwiched between the shoe body and the auxiliary shoe body; and curing the reinforcement layer to attach the auxiliary shoe body to the shoe body to form the shoe structure and shape the shoe structure by thermal plastic molding.

In another embodiment, the present invention provides a shoe structure including a first shoe body including a first upper section, a first sole section, and a first rear section; a second shoe body including a second upper section, a second sole section, and a second rear section; and a connection section connected between the first shoe body and the second shoe body, wherein the second shoe body is inserted into the first shoe body to form the shoe structure with an opening in a manner that the first upper section overlaps the second upper section, the first sole section overlaps the second sole section, the first rear section overlaps the second rear section, and the connection section is folded to define the opening for receiving a foot of a wear into the shoe structure.

In an embodiment, the first shoe body, the connection section, and the second shoe body are knitted sequentially from at least one yarn in a unitary structure with an adjustable interior before the second shoe body is inserted into the first shoe body.

In an embodiment, the shoe structure further includes a reinforcement layer simultaneously knitted from a thermal plastic yarn on at least one of the first shoe body and the second shoe body when the unitary structure is formed, wherein the reinforcement layer is disposed within the adjustable interior and is thermal-curable.

In an embodiment, the second shoe body is inserted into the first shoe body in a manner that the reinforcement layer is sandwiched between the first shoe body and the second shoe body, and the first shoe body and the second shoe body are attached to each other by the reinforcement layer after the reinforcement layer is cured.

In an embodiment, the reinforcement layer is knitted substantially on the first shoe body, the connection section, and the second shoe body within the adjustable interior.

In another embodiment, the present invention provides a method for manufacturing a shoe structure. The method includes knitting a first shoe body from at least one yarn, the first shoe body including a first upper section, a first sole section, and a first rear section connected by knitting without any sewing portion; knitting a second shoe body from at least one yarn, the second shoe body including a second upper section, a second sole section, and a second rear section connected by knitting without any sewing portion; knitting a connection section from at least one yarn to connect the first shoe body and the second shoe body; and inserting the second shoe body into the first shoe body to form the shoe structure with an opening in a manner that the first upper section overlaps the second upper section, the first sole section overlaps the second sole section, the first rear section overlaps the second rear section, and the connection section is folded to define the opening for receiving a foot of a wear into the shoe structure.

In an embodiment, the first shoe body, the connection section, and the second shoe body are knitted sequentially to form a unitary structure with an adjustable interior before the second shoe body is inserted into the first shoe body.

In an embodiment, the method further includes knitting a reinforcement layer from a thermal plastic yarn on at least one of the first shoe body and the second shoe body when the unitary structure is formed, wherein the reinforcement layer is disposed within the adjustable interior and is thermal-curable.

In an embodiment, the method further includes curing the reinforcement layer to attach the second shoe body to the first shoe body and shape the shoe structure by thermal plastic molding.

In an embodiment, the shoe structure further includes an inlaid strand in the shoe body, wherein the inlaid extends from a centerline of the sole section toward the upper section, a portion of the inlaid strand is exposed to form a loop adjacent to the upper section, and the loop serves as a lace aperture.

### BRIEF DESCRIPTION OF THE DRAWINGS

The present invention will be apparent to those skilled in the art by reading the following description of preferred embodiments thereof with reference to the drawings, in which:
FIG. 1 is a perspective view of a shoe structure according to one embodiment of the present invention;
FIG. 2 is a schematic view showing courses and wales of the shoe structure according to one embodiment of the present invention;
FIG. 3A and FIG. 3B are schematic showing two different knitting manners according to embodiments of the present invention;
FIG. 4 is a perspective view of a shoe structure according to another embodiment of the present invention;
FIG. 5A and FIG. 5B are an exploded view and a perspective view of a shoe structure according to another embodiment of the present invention;
FIG. 6A and FIG. 6B are an exploded view and a perspective view of a shoe structure according to another embodiment of the present invention;
FIG. 7A and FIG. 7B are schematic views of a shoe structure before the second shoe body is inserted into the first shoe body according to another embodiment of the present invention;
FIG. 7C is a perspective view of FIG. 7B after the second shoe body is inserted into the first shoe body.
FIG. 8A to FIG. 8C are schematic view of a shoe structure according to another embodiment of the present invention;
FIG. 9 is an exploded view, taken from one side, showing the shoe structure including the outsole structure, the tongue, and the counter according to an embodiment of the present invention;
FIG. 10 is an exploded view, taken from another side, of FIG. 9;
FIG. 11 is a perspective view of FIG. 9; and
FIGs. 12A and 12B are schematic views of the shoe structure including the inlaid strand in the shoe body according to an embodiment of the present invention.

### DETAILED DESCRIPTION OF THE PREFERRED EMBODIMENTS

The present invention provides a shoe structure, which is an integrally knitted structure and has no sewing arrangement on the shoe body, provides excellent elasticity, and saves cost of material. For a throughout understanding of the present invention, details of steps and structures of the present invention will be descried. Any manufacturing process and specific steps for manufacturing the structure of shoe that are well known in the art will not be descried in order not to impose undue limitations to the present invention. However, details of preferred embodiments of the present invention will be given hereinafter and beyond these descriptions, the present invention is equally applicable to a variety of embodiments. The scope of the present invention is not to be limited by the descriptions and is only defined in the appended claims.

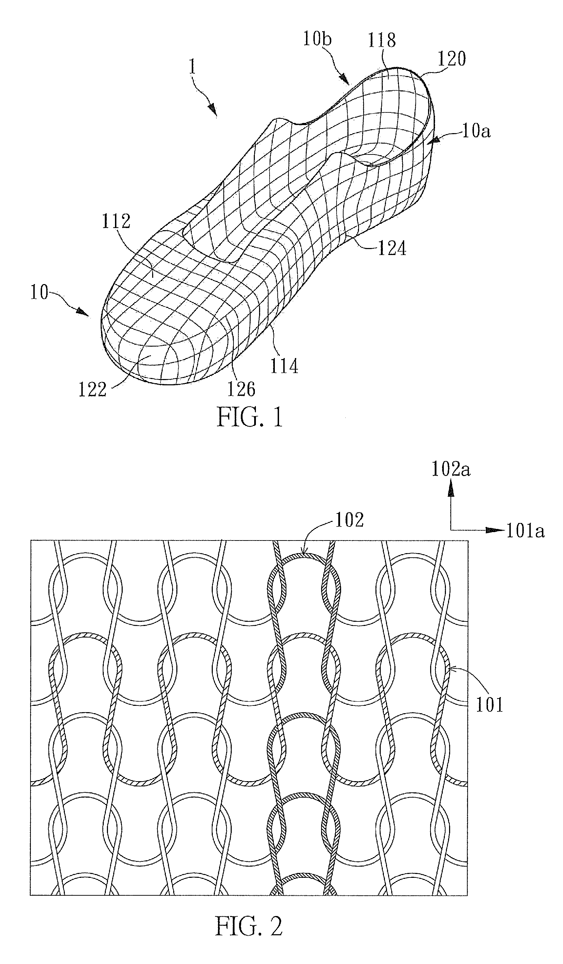

FIG. 1 is a perspective view of a shoe structure. As shown in FIG. 1, the shoe structure 1 includes a shoe body 10. The shoe body 10 is knitted from at least one yarn in unitary structure with only one opening 118 for receiving a foot of a wearer therein. That is, the shoe body 10 can be manufactured by knitting one or more than one yarn into a unitary shoe body consisting of multiple courses and wales. Please note that the number, color, or material of yarns for knitting the shoe body 10 can be determined according to the stretchable requirements for different sections, the color or pattern design of the shoe body, etc.

The shoe body 10 includes an upper section 112, a sole section 114, and a rear section 120. The upper section 112, the sole section 114, and the rear section 120 are connected by knitting without any sewing portion to form the opening 118. The opening 118 receives the insertion of a foot of a wearer to allow the shoe to be worn on the wearer for walking. The upper section 112 corresponds to fore and lateral portions of the foot; the sole section 114 supports a sole portion of the foot; the rear section 120 corresponds to a heel portion of the foot. Particularly, the upper section 112 includes a fore portion 126 and a flank portion 124, wherein the fore portion 126 corresponds to the toe and instep portions of the foot; the flank portion corresponds to the lateral portion of the foot. That is, the upper section 112 extends from the toe portion along the instep and lateral portions of the foot and then connects the rear section 120. The sole section 114 extends along the sole portion of the foot, i.e. extends from one end of the fore portion 126 to the rear section 120, and connects the upper section 112 and the rear section 120. The rear section 120 substantially covers and protects the heel portion of the foot.

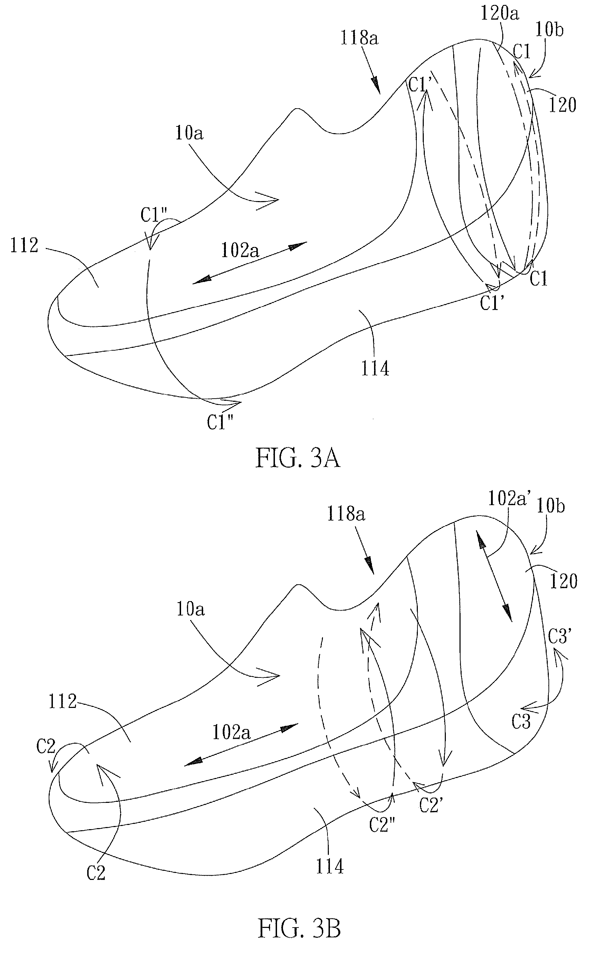

Moreover, the shoe body 10 consists of multiple courses and wales formed by the at least one yarn, and the wales in the upper section 112 preferably extend along a direction 102a perpendicular to a receiving direction 118a of the opening 118 into the shoe body 10 (shown in FIG. 3A and FIG. 3B). As shown in FIG. 2, a course 101 is a horizontal row of needle loops; a wale 102 is a vertical column of intermeshed needle loops. That is, a meandering path along which the yarn is knitted is defined as the course 101; the extending direction 102a of the wale 102 crosses the extending direction 101 a of the course 101. Accordingly, the upper section 112, the sole section 114, and the rear section 120 can be knitted in a predetermined sequence from the yarn(s) to include multiple courses and wales which constitute the unitary three-dimensional shoe body without any sewing portion.

In an embodiment, as shown in FIG. 3A, the wales in the rear section 120 and the sole section 114 extend along the same direction as the wales in the upper section 112. That is, the wales in the rear section 120, the sole section 114, and the upper section 112 extend along a uni-direction 102a, which is substantially perpendicular to a receiving direction 118a of the opening 118 into the shoe body 10. In the embodiment, the yarn(s) can be knitted from the rear section 120 by a double-needle bed knitting machine in a C-shaped knitting manner. That is, as shown in FIG. 1 and FIG. 3A, the at least one yarn is knitted starting from the center line 120a of the rear section 120 along a C-shaped course C1, C1', wherein the center line 120a is substantially parallel to the insertion direction 118a of the opening 118. During the knitting, needles of the front needle bed of the double-needle bed knitting machine knit the yarn(s) from a first side 10a of the shoe body 10 along the course C1 to the middle of the sole section 114, and then needles of the rear needle bed pick up and knit the yarn(s) continuously along the course C1 to the second side 10b of the shoe body 10. As such, one course for the rear section 120 and the sole section 114 is completed.

During the knitting of next course, the needles of the rear needle bed of the double-needle bed knitting machine knit the yarn(s) from the second side 10b of the shoe body 10 along the reverse course C1' to the middle of the sole section 114, and then the needles of the front needle bed pick up and knit the yarn(s) continuously along the reverse course C1' to the first side 10a of the shoe body 10. As such, a second course for the rear section 120 and the sole section 114 is completed. Then, the knitting process to form the shoe body 10 consisting of multiple courses and wales is continued repeatedly along the course C1, C1' until the opening 118 is formed by the rear section 120 and the flank portion 124 of the upper section 112.

For the fore portion 126 of the upper section 112 and the rest of the sole section 114, the yarn(s) is knitted along a circular course C1" by the double-needle bed knitting machine to complete the knitting of the shoe body 10. That is, needles of the front and rear needle beds knit the yarn(s) along a respective C-shaped course to constitute the circular course C1" for the fore portion 126 of the upper section 112 and the rest of the sole section 114. The knitting process stops at the point where the fore portion 126 and the front portion of the sole section 114 are connected in a closed configuration. Consequently, the shoe body 10 knitted in a manner shown in FIG. 3A will have the wales extending from the rear section 120 to the fore portion 126 of the upper section 112. That is, the extending direction 102a of the wales in the upper section 112, the sole section 114 and the rear section 120 is the same and substantially perpendicular to the receiving direction 118a of the opening 118, and only one opening 118 is formed in the shoe body 10.

In another embodiment, the wales in the rear section 120 can extend along a direction different from the wales in the upper section 112 and the sole section 114. As shown in FIG. 3B, the yarn(s) can be knitted starting from the fore portion 126 of the upper section 112 that is close to the sole section 114. Similarly, during the knitting, the yarn(s) is knitted along a circular course C2 by the double-needle bed knitting machine. That is, needles of the front and rear needle beds knit the yarn(s) along a respective C-shaped course to constitute the circular course C2 for the fore portion 126 of the upper section 112 and the fore portion of the sole section 114 until the opening 118 is to be formed. Then, needles of the front and rear needle beds will repeatedly knit the yarn(s) from the first side 10a to the second side 10b or from the second side 10b to the first side 10a along the C-shaped course C2' or C2" in a manner similar to FIG. 3A when forming the opening 118 to form the flank portion 124 of the upper section 112 and the other portion of the sole section 114.

During the knitting of the rear section 120, the yarn(s) knitted along the courses C2' or C2" in the upper section 112 and the sole section 114 changes to the course C3, C3' in the rear section 120, wherein the knitting direction C2, C2', C2" in the upper section 112 and the knitting direction C3, C3' in the rear section 120 are two cross directions. That is, the shoe body 10 knitted in a manner shown in FIG. 3B will have the wales in the upper section 112 and the sole section 114 extending along the direction 102a, which is substantially perpendicular to the receiving direction 118a of the opening 118, and the wales in the rear section 120 extending along a direction 102a' that is substantially parallel to the receiving direction 118a of the opening 118.

By using the double-needle bed knitting machine, the shoe body 10 can be knitted from the yarn(s) in unitary structure with only one opening 118, but not limited thereto. In another embodiment, the connection between the fore portion 126 of the upper section 112 and the sole section 114 can be knitted in an open configuration as appropriate. That is, the shoe body may have a second opening on the fore portion of the upper section to expose the toe portion of the foot. Moreover, the knitting direction can be changeable according to the stretchable requirements for different sections and the pattern of the shoe body 10 to create a versatile of shoe bodies by means of the C-shaped knitting manner. That is, once the knitting process is completed, an integral three-dimensional shoe body is formed; no sewing arrangement is required for the connection of the upper section, the sole section, and the rear section, simplifying the manufacture process and saving the material and labor cost induced from conventional cutting and stitching processes.

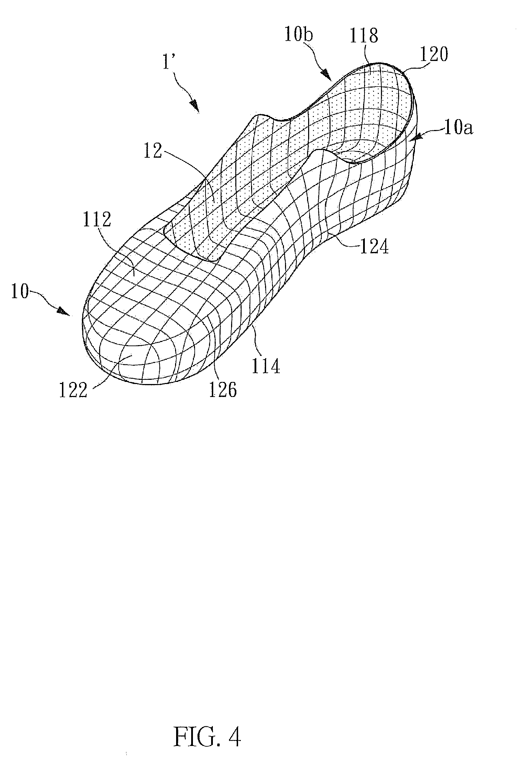

In another embodiment, as shown in FIG. 4, in addition to the shoe body 10, the shoe structure 1' further includes a reinforcement layer 12, wherein the reinforcement layer 12 is knitted from a thermal plastic yarn on the shoe body 10. The reinforcement layer 12 and the shoe body 10 are simultaneously knitted together when the shoe body 10 is formed, and the reinforcement layer 12 is thermal-curable. That is, the shoe structure 1' can be manufactured by simultaneously knitting the at least one yarn and the thermal plastic yarn together to form the shoe body 10 with the reinforcement layer 12 thereon by the double-needle bed knitting machine with at least two feeding assemblies. The reinforcement layer 12 can be knitted on the upper section 112, the sole section 114, and/or the rear section 120 in a manner similar to those described in FIG. 3A or FIG. 3B.

The reinforcement layer 12 can be cured to form a reinforcement structure for the shoe body 10 and shape the shoe body 10 by thermal plastic molding. That is, the shoe structure 1' having the shoe body 10 and the reinforcement layer 12 can be processed by thermal plastic molding, so that the thermal plastic yarn in the reinforcement layer 12 is melted to be uniformly distributed over the surface of the shoe body 10 and then harden to support the shape of the shoe structure 1' and enhance the structural strength of the shoe structure 1', preventing the shoe body 10 from being un-shapeable in the same way as socks do. The material of the thermal plastic yarn includes any suitable thermal curable material including, but not limited to, nylon, polyester, acrylic, etc.

In this embodiment, the reinforcement layer 12 is preferably knitted on the inner side of the shoe body 10 as an inner layer of the shoe structure 1' and the shoe body 10 serves as an outer layer of the shoe structure 1', but not limited thereto. In other embodiments, the reinforcement layer 12 can be knitted on the outer side of the shoe body 10 as an outer layer of the shoe structure and the shoe body 10 serves as an inner layer of the shoe structure. The reinforcement layer 12 can be made in the form of various patterns, characters, or signs, whereby the shoe body 10 may use the various configurations of the reinforcement layer 12 to support the shoe body 10 and also to improve aesthetic appearance of the shoe structure. In another embodiment, the reinforcement layer 12 can be arranged on an inside surface, an outside surface or both surface of a toe compartment 122 of a fore portion 126 of the upper section 112. As such, the reinforcement layer 12 may provide protection to the toes against damage caused by a downward impact or hit. Further, the reinforcement layer 12 can be arranged on a flank portion 124 of the upper section 112 to prevent the foot of the wearer from shifting laterally inside the shoe structure 1 for reducing abrasion and protection of the foot from straining. In a further embodiment, the reinforcement layer 12 is provided on the rear section 120 for protecting the heel of the wearer from injury when the foot is moving longitudinally in the shoe structure.

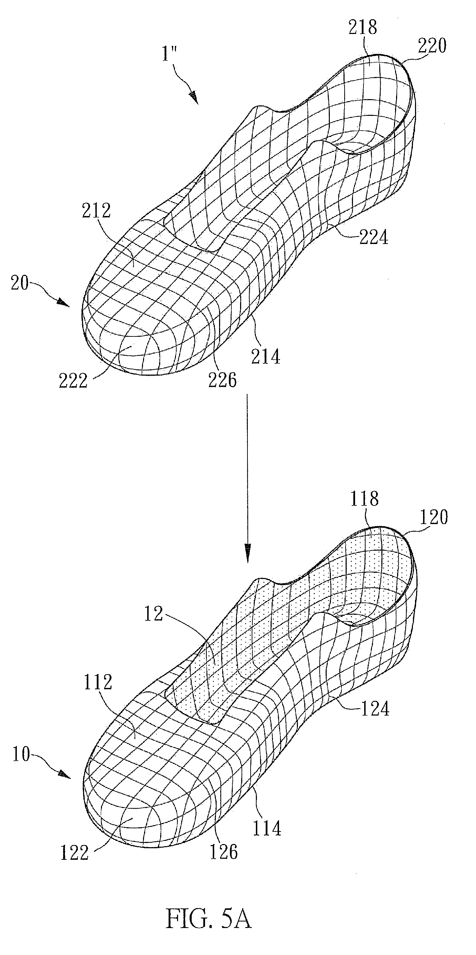

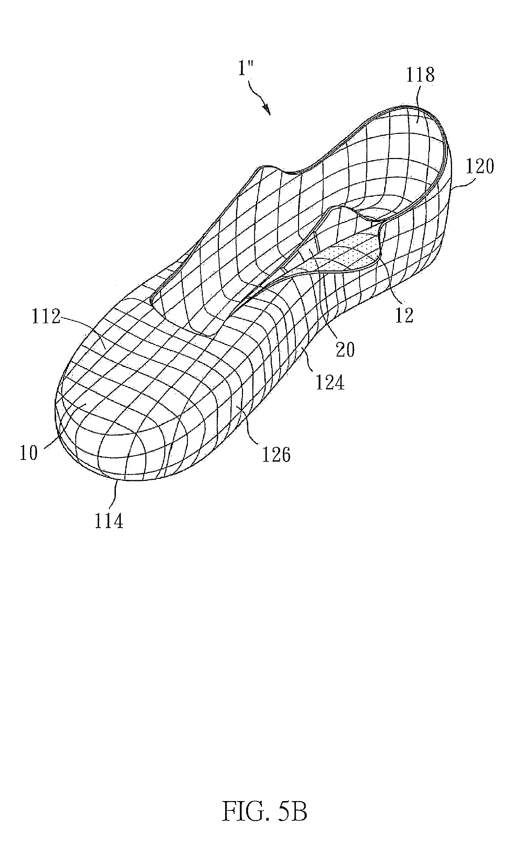

In another embodiment, as shown in FIG. 5A, the shoe structure 1" further includes an auxiliary shoe body 20 with an opening 218. The auxiliary shoe body 20 is knitted from at least one yarn in unitary structure. That is, the auxiliary shoe body 20 may have a same structure as the shoe body 10 and can be manufactured in a same manner as described in FIG. 3A or FIG. 3B, but not limited thereto. The auxiliary shoe body 20 has a shape substantially conformal to the shoe body 10. That is, the auxiliary shoe body 20 includes an upper section 212, a sole section 214, and a rear section 220 that respectively correspond to the upper section 112, the sole section 114, and the rear section 120 of the shoe body 10. The auxiliary shoe body 20 is inserted into the shoe body 10 through the opening 118 and the reinforcement layer 12 is sandwiched between the shoe body 10 and the auxiliary shoe body 20 and cured to attach the auxiliary shoe body 20 to the shoe body 10, as shown in FIG. 5B. In this embodiment, the auxiliary shoe body 20 serves as the inner layer of the shoe structure 1" to increase the interior appearance and the comfortability; the reinforcement layer 12 serves not only the strength enhanced layer and shape-supporting layer, but also an adhesive layer to attach the auxiliary shoe body 20 closely to the shoe body 10.

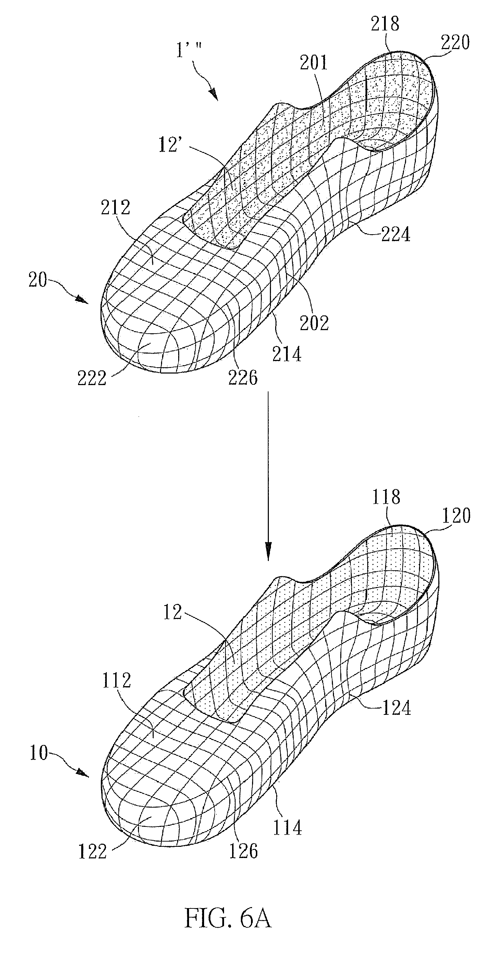

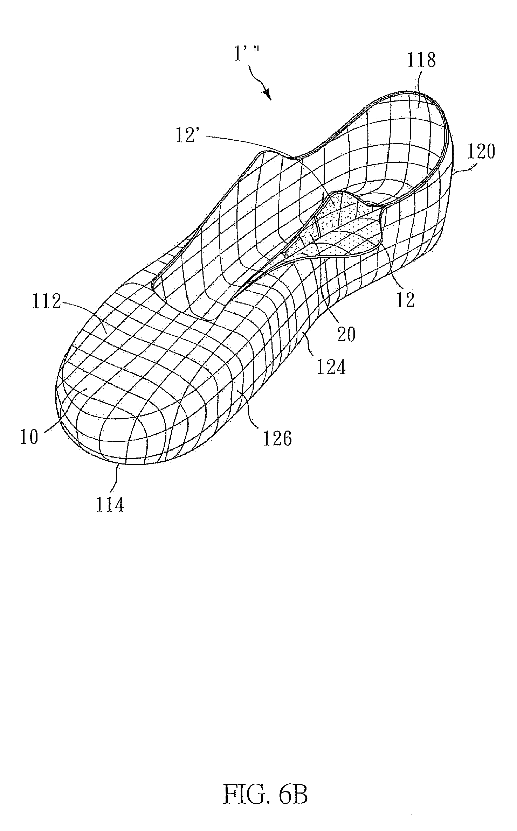

In another embodiment, as shown in FIG. 6A, the auxiliary shoe body 20 may also have a reinforcement layer 12' knitted from a thermal plastic yarn thereon. That is, the auxiliary shoe body 20 and the reinforcement layer 12' can be knitted from at least one yarn and a thermal plastic together in a same manner as the shoe structure 1' shown in FIG. 4. In such a case, when the auxiliary shoe body 20 is inserted into the shoe body 10 to form the shoe structure 1"', the reinforcement layer 12 on the shoe body 10 and the reinforcement layer 12' on the auxiliary shoe body 20' are positioned face to face. When the shoe structure 1'" undergoes a thermal plastic molding process, the reinforcement layers 12, 12' attach the auxiliary shoe body 20 closely to the shoe body 10, further enhancing the structural strength of the shoe structure 1"' and the adhesion between the auxiliary shoe body 20 and the shoe body 10, as shown in FIG. 6B.

In another embodiment, before the auxiliary shoe body 20 is inserted into the shoe body 10, the auxiliary shoe body 20 and the shoe body 10 may be linked together first. That is, the edge of the upper section 112 and the rear section 120 around the opening 118 of the shoe body 10 is linked to the edge of the upper section 212 and the rear section 220 around the opening 218 of the auxiliary shoe body 20 to enhance the connection between the auxiliary shoe body 20 and the shoe body 10. Moreover, before inserting the auxiliary shoe body 20 into the shoe body 10, the auxiliary shoe body 20 can be selectively flipped inside out to increase the versatility of the inner appearance of the shoe structure 1" or 1"'.

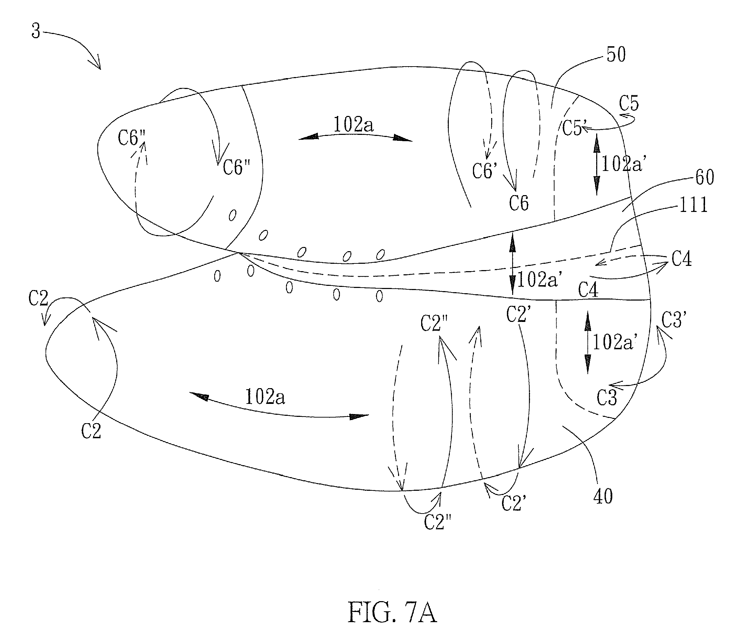

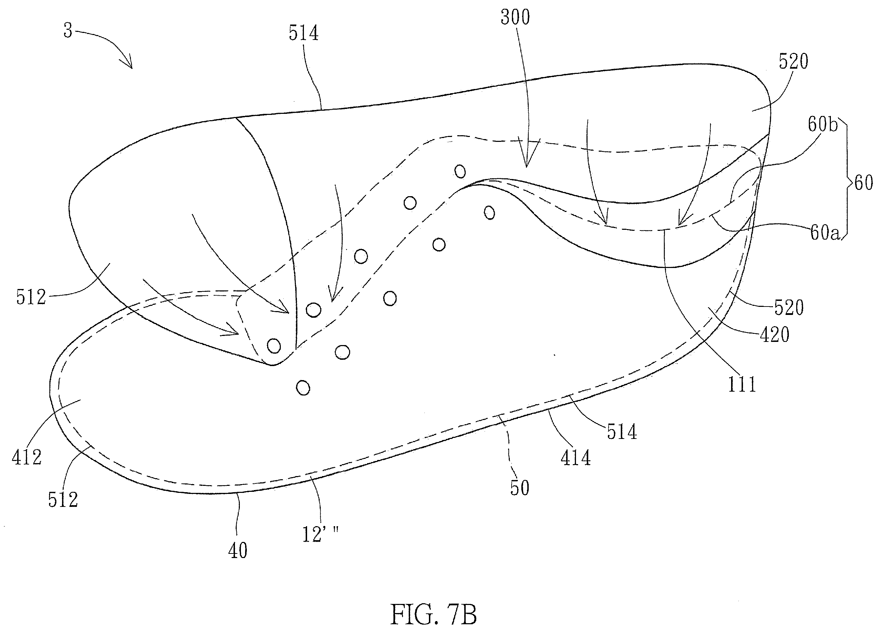

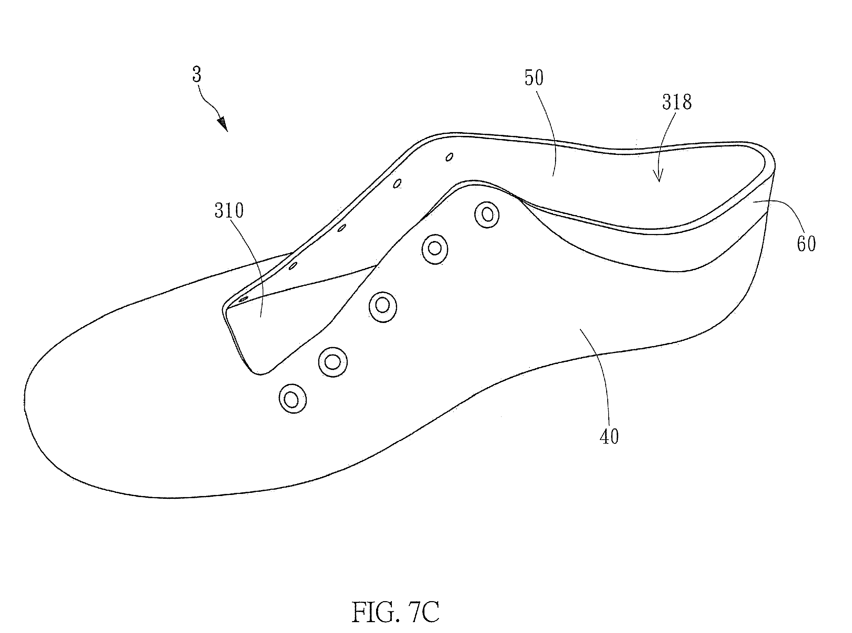

By using the double-needle bed knitting machine, a variety of shoe structures can be knitted in unitary three-dimensional form. As shown in FIG. 7A to FIG. 7C, in an embodiment, the shoe structure 3 includes a first shoe body 40, a second shoe body 50, and a connection section 60. The first shoe body 40 includes a first upper section 412, a first sole section 414, and a first rear section 420. Similarly, the second shoe body 50 includes a second upper section 512, a second sole section 514, and a second rear section 520. The connection section 60 is connected between the first shoe body 40 and the second shoe body 50. As shown in FIG. 7B and FIG 7C, the second shoe body 50 is inserted into the first shoe body 40 to form the shoe structure 3 with an opening 318 in a manner that the first upper section 412 overlaps the second upper section 512; the first sole section 414 overlaps the second sole section 514; the first rear section 420 overlaps the second rear section 520; the connection section 60 is folded along the folding line 111 to define the opening 318 for receiving a foot of a wear into the shoe structure 3.

As shown in FIG. 7A and FIG. 7B, before the second shoe body 50 is inserted into the first shoe body 40, the first shoe body 40, the connection 60, and the second shoe body 50 are knitted sequentially from at least one yarn in a unitary three-dimensional structure with an adjustable interior 300. That is, the first shoe body 40 can be knitted from the yarn(s) in a manner similar to the shoe body 10 in FIG. 3B, and the knitting direction is changed to form the connection section 60. Specifically, during the knitting of the connection section 60, the yarn(s) is knitted along the circular course C4 around the opening 118 as shown in FIG. 1. That is, needles of the front and rear needle beds knit the yarn(s) along a respective C-shaped course to constitute the circular course C4 for the connection section 60. As such, the extending direction 102a' of the wales in the connection section 60 crosses the extending direction 102a of the wales in the upper section 412 and the sole section 414 and is parallel to the extending direction 102a' of the wales in the rear section 420.

After the connection section 60 is formed, the knitting proceeds to form the rear section 520 of the second shoe body 50 along the course C5, C5' in a manner similar to the knitting of the rear section 420. Then, the knitting direction is changed when forming the upper section 512 and the sole section 514 of the second shoe body 50. Specifically, during the knitting of the upper section 512 and the sole section 514, the yarn(s) is knitted in a manner similar to FIG. 3A along the C-shaped course C6, C6' and simultaneously joins the edge of the connection section 60 respectively at two opposite sides to prolong the interior space from the first shoe body 40 through the connection section 60 to the second shoe body 50. Then, the knitting process is continued along the circular course C6" to complete the formation of the second shoe body 50 and a unitary three-dimensional knitted structure 3 with the adjustable interior 300 is formed. It is noted that, in this embodiment, the adjustable interior 300 is enclosed by the first body 40, the connection section 60, and the second shoe body 50 in a substantially closed configuration, but not limited thereto. That is, before the second shoe body 50 is inserted into the first shoe body 40, no opening for receiving the foot is formed.

During the knitting of the first shoe body 40, the connection section 60, and the second shoe body 50, a reinforcement layer 12'" is preferably simultaneously knitted from a thermal plastic yarn as described above on at least one of the first shoe body 40, the connection section 60, and the second shoe body 50. The reinforcement layer 12'" is disposed within the adjustable interior 300 and is thermal-curable. After the second shoe body 50 is inserted into the first shoe body 40 to form the shoe structure 3, the reinforcement layer 12'" can be cured to attach the second shoe body 50 to the first shoe body 40 and shape the shoe structure 3 by thermal plastic molding, enhancing the structural strength of the shoe structure 3.

It is noted when the second shoe body 50 is inserted into the first shoe body 40, the adjustable interior 300 is gradually reduced and finally no adjustable interior 300 exists when the reinforcement layer 12'" attaches the second shoe body 50 closely to the first shoe body 40. That is, when the second shoe body 50 is inserted into the first shoe body 40, the adjustable interior 300 inside the unitary structure constituted by the first shoe body 40, the connection section 60 and the second shoe body 50 is gradually disappeared and a shoe interior 310 is gradually formed inside the shoe structure 3, wherein the connection section 60 is fold along the folding line 111 to form the opening 318 of the shoe structure 3. Through the opening 318, the foot of a wearer can be received into the shoe interior 310.

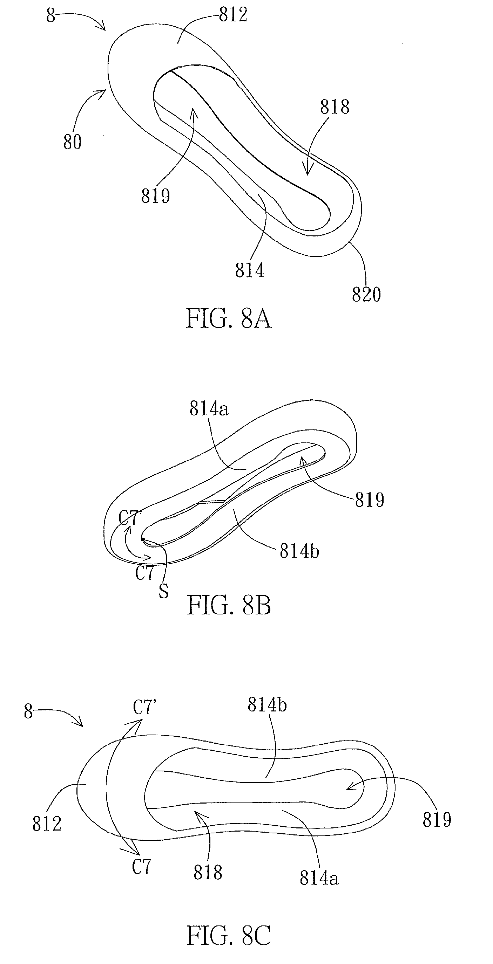

In another embodiment, the shoe structure formed by the double-needle bed knitting machine can have more than one opening to increase the applicability of shoe structure. As shown in FIG. 8A to FIG. 8C, the shoe structure 8 includes a shoe body 80 with a first opening 818 and a second opening 819, wherein the first opening 818 is adapted to receive a foot of a wearer into the shoe structure 8, and the second opening 819 is created for increasing the manufacturability and applicability of the shoe body 80. The shoe body 80 is knitted from at least one yarn. In this embodiment, the shoe body 80 is preferably knitted from at least two yarns, wherein the two yarns are simultaneously knitted to form an inner layer and an outer layer of the shoe body 80, respectively. Moreover, the shoe structure 8 can also include a reinforcement layer knitted from a thermal plastic yarn as described in previous embodiments. The at least two yarns and the thermal plastic yarn are simultaneously knitted together in a manner that the reinforcement layer is sandwiched between the inner layer and the outer layer of the two yarns. As such, when the shoe structure 8 undergoes a thermal plastic molding process, the inner and outer layers of the two yarns can be closely attached by the reinforcement layer, and therefore, the structural strength of the shoe structure 8 is enhanced.

The shoe body 80 includes an upper section 812, a sole section 814, and a rear section 820, which are connected by knitting without any sewing portion when the shoe body 80 is formed. As shown in FIG. 8B and 8C, the shoe body 80 is knitted from the yarn(s) by the double-needle bed knitting machine along the C-shaped course C7, C7'. Specifically, the knitting of the shoe body 80 begins at the starting point S, which is preferably the center point of the sole section 814 at the end close to the fore portion of the upper section 812. When forming the first opening 818 and the second opening 819, needles of the front and rear needle beds are separated to respectively form a left portion 814a and a right portion 814b of the sole section 814 along the C-shaped course C7, C7', so that the second opening 819 can be formed in the sole section 814. When the knitting approaches to the rear section 820, needles of the front and rear needle beds are joined together to form the rear section 120. It is noted, as described above, the knitting direction can be selectively changed so that the wales in the rear section 820 can extend along a direction that is different from the wales in the upper section 812 and the sole section 814, but not limited thereto.

In the embodiments, the shoe structure 1,1' 1 ", 1"', 3, 8 includes a knitted shoe body formed by the yarn(s); thus, the shoe structure 1, 1' 1 ", 1 "', 3, 8 has excellent air permeability and retains hygroscopicity and elasticity to provide a comfortable feeling of being well suited to the foot, enabling sufficient enclosure of the foot of the wearer and complying with the skin of the foot of the wearer to have an effect of second skin.

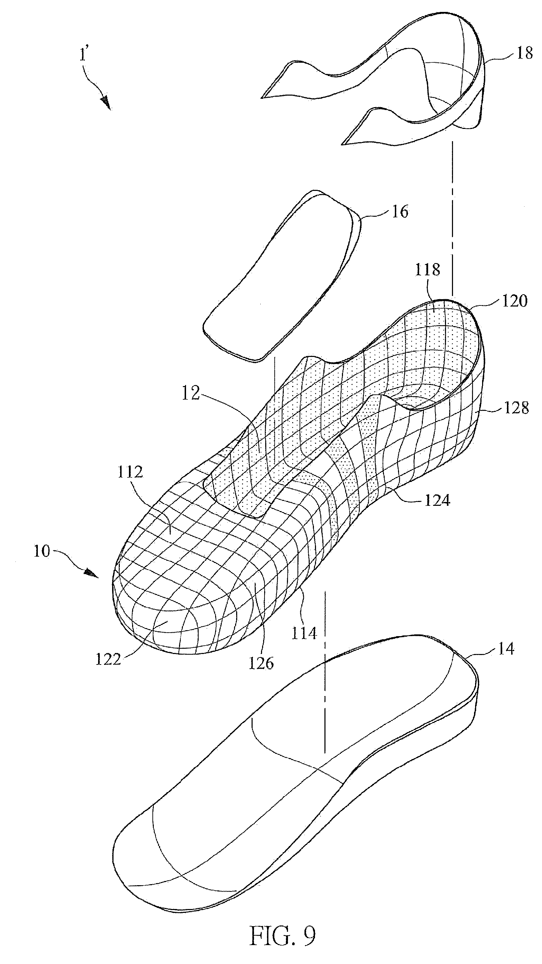

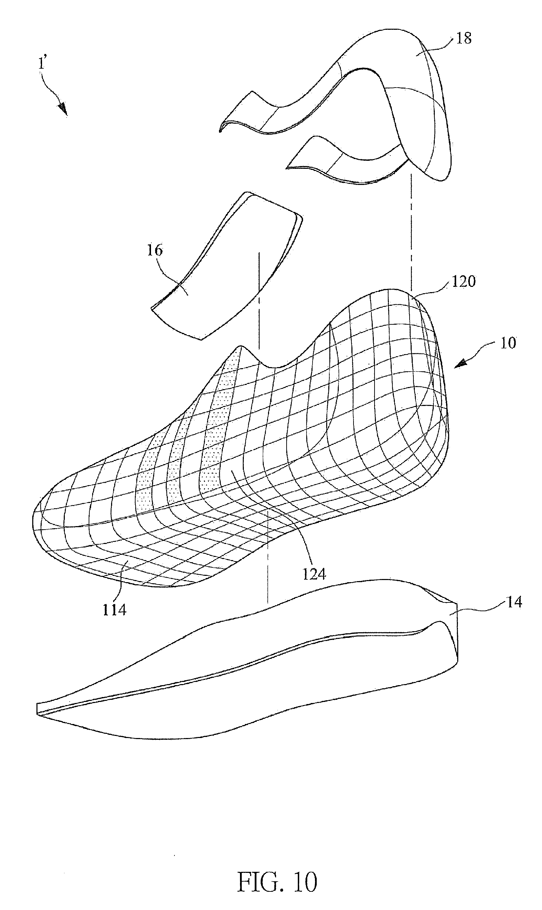

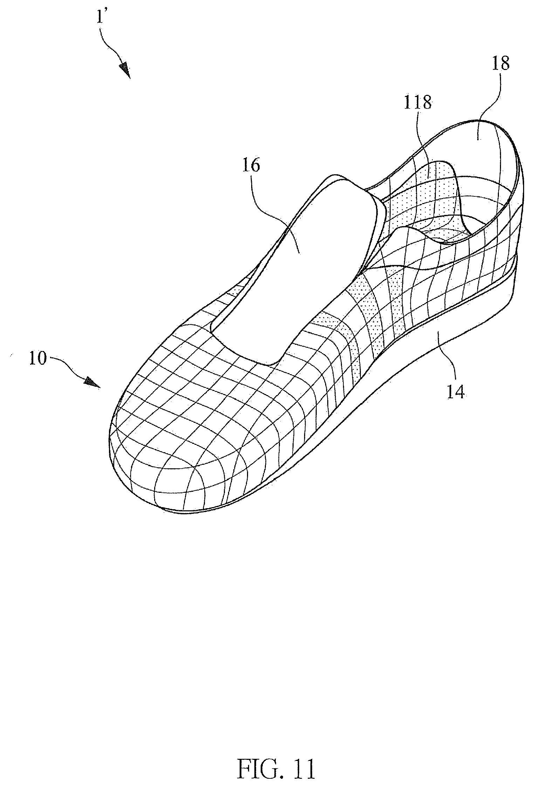

Referring to FIG. 9 to FIG. 11, FIG. 9 is an exploded view of a shoe structure that includes an outsole structure, a tongue, and a counter; FIG. 10 is an exploded view, taken from one side, showing the shoe structure of FIG. 9; FIG. 11 is a perspective view of the shoe structure of FIG. 9. In the previously discussed embodiments, the shoe structure 1, 1' 1 ", 1 "', 3, 8 is provided, ready for being put on the foot of a wearer. To further improve the ground contact characteristic and comfortableness of walking of the shoe structure 1,1' 1 ", 1"', 3, 8 put on the foot of the wearer, in an embodiment having the shoe structure 1' as an example, the shoe structure 1' is provided, on the sole section 114 thereof, with an outsole structure 14, as shown in FIG. 9 and FIG. 10. In an embodiment, the outsole structure 14 is integrally formed with the shoe body 10. Alternatively, the outsole structure 14 can be bonded to the bottom 114 of the shoe body 10 by an adhesive layer (not shown).

The shoe structure 1' may be provided with additional components for functionality. Specifically, in this embodiment, the shoe structure 1' further includes a tongue 16, which is arranged in a fore portion 126 of the shoe body 10 in such a way to expose a portion of the opening 118 for protection of the instep of the foot. In an embodiment, the tongue 16 can be integrally knitted with the shoe body 10. In another embodiment, depending upon the application of the shoe structure 1', the tongue 16 is provided separately from the shoe body 10.

The shoe structure 1' may further include a counter 18, which is provided corresponding to the rear section 120 of the shoe body 10 and may be positioned inside or outside the shoe body 10. Providing the counter 18 helps improve the supporting force of a hind portion 128 and also protects the heel of the wearer from damage caused by walking or exercising.

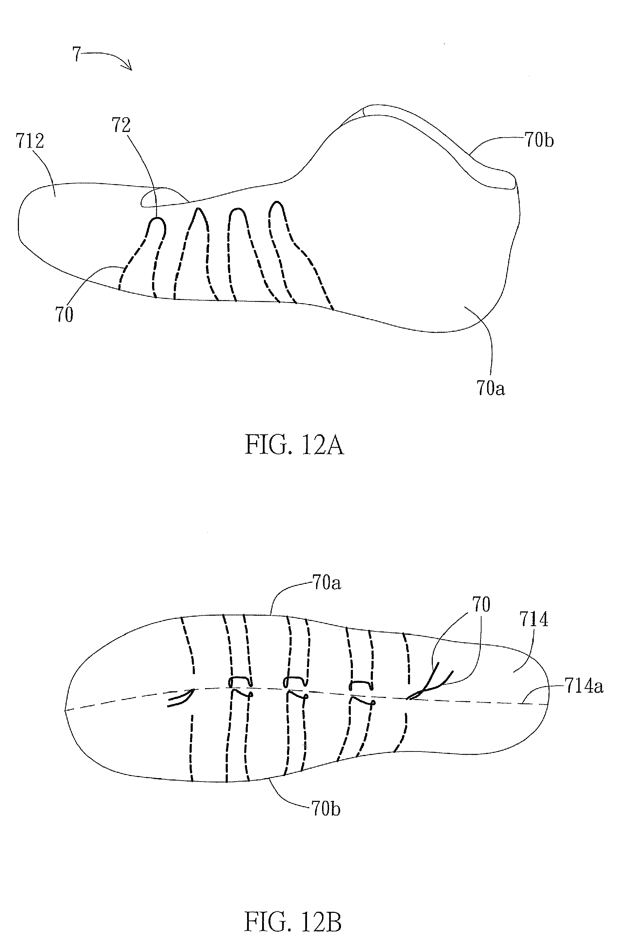

Moreover, during the knitting of the shoe body, an inlaid strand can be combined with the shoe body to enhance support, stability, structure strength, etc. In another embodiment, as shown in FIGs. 12A and 12B, an inlaid strand 70 extends through the shoe body 7 and passes between the various loops within the shoe body 7, wherein the shoe body 7 can be knitted in a manner similar to the shoe body 1 or 1', but not limited thereto. In this embodiment, the inlaid strand 70 extend along the courses within the shoe body 7, but not limited thereto. In another embodiment, the inlaid strand can extend along the wales in the shoe body. Portions of the inlaid strand 70 can be visible or exposed on the outer surface of the shoe body 7 to improve aesthetic appearance.

In this embodiment, two inlaid strand 70 respectively extend from the centerline 714a of the sole section 714 of the shoe body 7 toward the upper section 712 along the flank portion on two sides (e.g. first side 70a and second side 70b) of the upper section 712 of the shoe body 7, and form loops 72 adjacent to the edge of the upper section 712 and back to the centerline 714a of the sole section 714. In an embodiment, the loop 72 formed by the inlaid strand 70 is exposed and can serve as a lace aperture for positioning the shoe lace. In this embodiment, the inlaid strands 70 repeatedly extend in the flank portion of the upper section 712 of the shoe body 7 to form a plurality of loops 72 on two sides 70a, 70b of the shoe body 7 to serve as the lace apertures, but not limited thereto. In another embodiment, the inlaid strand 70 can extend to the fore portion of the upper portion 712 or the rear section of the shoe body 7 to improve the structural strength, aesthetic appearance of the shoe structure.

In an embodiment, the inlaid strand 70 may consist of yarn(s), but not limited thereto. In another embodiment, the inlaid strand 70 may have the configuration of a filament, thread, rope, webbing, cable, or chain, for example. The material of the inlaid strand 70 may be cotton, elastane, polyester, rayon, wool, or nylon, but not limited thereto. In this embodiment, the inlaid strand 70 is preferably simultaneously knitted in the shoe body 7 along the same C-shaped course during knitting the at least one yarn to form the shoe body 7 to save the production cost.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A shoe structure, comprising:
a shoe body knitted from at least one yarn in unitary structure with only one opening for receiving a foot of a wear therein, the shoe body comprising an upper section, a sole section, and a rear section connected by knitting without any sewing portion when the shoe body is formed, the upper section corresponding to fore and lateral portions of the foot, the sole section supporting a sole portion of the foot, the rear section corresponding to a heel portion of the foot, wherein the shoe body consists of multiple courses and wales formed by the at least one yarn, the wales in the upper section extend along a direction perpendicular to a receiving direction of the opening into the shoe body; and
a reinforcement layer knitted from a thermal plastic yarn on the shoe body, wherein the reinforcement layer and the shoe body are simultaneously knitted together when the shoe body is formed, and the reinforcement layer is thermal-curable.

2. The shoe structure of claim 1, further comprising an auxiliary shoe body knitted from at least one yarn in unitary structure, the auxiliary shoe body having a shape conformal to the shoe body, wherein the auxiliary shoe body is inserted into the shoe body through the opening and the reinforcement layer is sandwiched between the shoe body and the auxiliary shoe body and cured to attach the auxiliary shoe body to the shoe body.

3. A method for manufacturing a shoe structure, comprising:
knitting at least one yarn to form a shoe body in unitary structure with an opening for receiving a foot of a wearer, the shoe body comprising an upper section, a sole section, and a rear section connected by knitting without any sewing portion, the upper section corresponding to fore and lateral portions of the foot, the sole section supporting a sole portion of the foot, the rear section corresponding to a heel portion of the foot; and
knitting a thermal plastic yarn to form a reinforcement layer on the shoe body, wherein the reinforcement layer and the shoe body are simultaneously knitted together when the shoe body is formed.

4. The method of claim 3, wherein the at least one yarn is knitted so that the shoe body consists of multiple courses and wales formed by the at least one yarn; the wales in the rear section, the sole section, and the upper section are knitted along a same direction substantially perpendicular to a receiving direction of the opening into the shoe body.

5. The method of claim 3, further comprising curing the reinforcement layer to form a reinforcement structure for the shoe body and shape the shoe body by thermal plastic molding.

6. The method of claim 3, further comprising:
knitting at least one yarn to form an auxiliary shoe body, the auxiliary shoe body having a shape conformal to the shoe body;
inserting the auxiliary shoe body into the shoe body through the opening and the reinforcement layer is sandwiched between the shoe body and the auxiliary shoe body; and
curing the reinforcement layer to attach the auxiliary shoe body to the shoe body to form the shoe structure and shape the shoe structure by thermal plastic molding.

7. A shoe structure, comprising:
a first shoe body comprising a first upper section, a first sole section, and a first rear section;
a second shoe body comprising a second upper section, a second sole section, and a second rear section;
a connection section connected between the first shoe body and the second shoe body,
wherein the second shoe body is inserted into the first shoe body to form the shoe structure with an opening in a manner that the first upper section overlaps the second upper section, the first sole section overlaps the second sole section, the first rear section overlaps the second rear section, and the connection section is folded to define the opening for receiving a foot of a wear into the shoe structure.

8. The shoe structure of claim 7, wherein the first shoe body, the connection section, and the second shoe body are knitted sequentially from at least one yarn in unitary structure with an adjustable interior before the second shoe body is inserted into the first shoe body.

9. The shoe structure of claim 8, further comprising a reinforcement layer simultaneously knitted from a thermal plastic yarn on at least one of the first shoe body and the second shoe body when the unitary structure is formed, wherein the reinforcement layer is disposed within the adjustable interior and is thermal-curable.

10. The shoe structure of claim 9, wherein the second shoe body is inserted into the first shoe body in a manner that the reinforcement layer is sandwiched between the first shoe body and the second shoe body, and the first shoe body and the second shoe body are attached to each other by the reinforcement layer after the reinforcement layer is cured.

11. A method for manufacturing a shoe structure, comprising:
knitting a first shoe body from at least one yarn, the first shoe body comprising a first upper section, a first sole section, and a first rear section connected by knitting without any sewing portion;
knitting a second shoe body from at least one yarn, the second shoe body comprising a second upper section, a second sole section, and a second rear section connected by knitting without any sewing portion;
knitting a connection section from at least one yarn to connect the first shoe body and the second shoe body; and
inserting the second shoe body into the first shoe body to form the shoe structure with an opening in a manner that the first upper section overlaps the second upper section, the first sole section overlaps the second sole section, the first rear section overlaps the second rear section, and the connection section is folded to define the opening for receiving a foot of a wear into the shoe structure.

12. The method of claim 11, wherein the first shoe body, the connection section, and the second shoe body are knitted sequentially to form a unitary structure with an adjustable interior before the second shoe body is inserted into the first shoe body.

13. The method of claim 12, further comprising knitting a reinforcement layer from a thermal plastic yarn on at least one of the first shoe body and the second shoe body when the unitary structure is formed, wherein the reinforcement layer is disposed within the adjustable interior and is thermal-curable, and curing the reinforcement layer to attach the second shoe body to the first shoe body and shape the shoe structure by thermal plastic molding.

14. The shoe structure of claim 1, further comprising an inlaid strand in the shoe body, wherein the inlaid extends from a centerline of the sole section toward the upper section, a portion of the inlaid strand is exposed to form a loop adjacent to the upper section, and the loop serves as a lace aperture.

15. The method of claim 3, further comprising simultaneously knitting an inlaid strand in the shoe body during knitting the at least one yarn to form the shoe body, wherein during knitting the inlaid strand, the inlaid extends from a centerline of the sole section toward the upper section, a portion of the inlaid strand is exposed to form a loop adjacent to the upper section, and the loop serves as a lace aperture.
